# EUROPEAN PATENT APPLICATION

(11) **EP 3 437 742 A1**
(43) Date of publication of application: **06.02.2019**
(21) Application number: 18185882.0
(22) Date of filing: 26.07.2018
(51) Int. Cl.: B05C 5/02, B29C 65/52, B29C 65/78

(54) **BONDING DEVICE AND UPPER TRANSPORT UNIT**

(30) Priority: 31.07.2017 JP 2017148420
(71) Applicant: BROTHER KOGYO KABUSHIKI KAISHA, Aichi-ken 467-8561 (JP)
(72) Inventor: IWAKOSHI, Hiroyasu, Nagoya-shi Aichi-ken 467-8562 (JP)
(74) Representative: J A Kemp

(57) **Abstract**

A bonding device (1) includes a transport mechanism (43) including an upper transport roller (12) and an upper transport motor (71). The upper transport roller is moved by an actuator to a press position and to a standby position. A link mechanism (90) has a first link (91) and a second link (92). When the upper transport roller is in a press position, the second link extends downward to one end portion (92A) from another end portion (92B) of the second link, and the first link extends toward an upstream side in a transport direction and downward to one end portion (91A) from another end portion (91B) of the first link. When the upper transport roller is in a standby position, the second link extends toward a downstream side in the transport direction and downward from the other end portion of the second link to the one end portion.

## Description

### BACKGROUND

The present invention relates to a bonding device and an upper transport unit.

A bonding device is known that bonds two sheets together via an adhesive. A bonding device disclosed in Japanese Laid-Open Patent Publication No. 2016-190913 is provided with a nozzle, an upper transport roller, an upper arm, and an air cylinder. The nozzle discharges the adhesive onto a lower sheet in a facing position. The upper transport roller transports the lower sheet, to which the adhesive has been applied, and an upper sheet while pressing the lower sheet and the upper sheet between the upper transport roller and a lower transport roller at a press position. The upper arm extends forward from a coupling portion with the front end portion of an upper arm base, and bends and extends diagonally forward and downward. The front end portion of the upper arm rotatably supports the upper transport roller. The air cylinder swings the upper arm around the coupling portion with the front end portion of the upper arm base.

### SUMMARY

It is preferable that the press position be in the vicinity of a downstream side of the nozzle that is in the facing position in a transport direction of the upper sheet. In the above-described bonding device, the upper arm swings around the coupling portion with the upper arm base. Therefore, when the upper arm moves upward, the upper transport roller moves forward and upward from the press position. Therefore, if an interval between the nozzle in the facing position and the upper transport roller is narrow, the nozzle and the upper transport roller interferer with each other when the upper transport roller moves upward. If priority is given to narrowing the interval between the nozzle and the upper transport roller and an upward movement amount of the upper roller is reduced, workability deteriorates when the upper sheet and the lower sheet are arranged at a predetermined position.

It is an object of the present invention to provide a bonding device and an upper transport unit that have an improved ratio of a movement amount of the upper transport roller in a transport direction of an upper sheet with respect to a movement amount of the upper transport roller in an up-down direction.

A bonding device according to the first aspect of the present invention includes a nozzle, a supply mechanism, and a transport mechanism. The nozzle is provided between a lower sheet and an upper sheet overlapped on the lower sheet from above. The nozzle has a discharge port configured to discharge an adhesive toward the lower sheet. The supply mechanism is configured to supply the adhesive to the nozzle. The transport mechanism is configured to transport the lower sheet to which the adhesive has been applied and the upper sheet. The transport mechanism includes a lower transport roller, an upper transport roller, a lower transport motor, a support arm portion, and an upper transport motor. The lower transport roller is configured to rotate around a lower roller shaft on a downstream side in a transport direction of the lower sheet and the upper sheet with respect to the nozzle. The lower transport roller is configured to come into contact with the lower sheet from below. The lower roller shaft extends in an axial direction orthogonal to the transport direction and an up-down direction. The upper transport roller is configured to rotate around an upper roller shaft extending in the axial direction. The upper transport roller is configured to clamp, from above, the lower sheet and the upper sheet between the upper transport roller and the lower transport roller. The lower transport motor is configured to drive the lower transport roller. The support arm portion is configured to rotatably support the upper transport roller at one end portion of the support arm portion. The support arm portion is configured to swing around another end portion side of the support arm portion. The upper transport motor is configured to drive the upper transport roller. The upper transport roller is moved by an actuator to a press position, at which the upper transport roller presses the upper sheet and the lower sheet between the upper transport roller and the lower transport roller, and to a standby position, at which the upper transport roller is positioned above the press position. The bonding device includes a link mechanism and a seat portion. The link mechanism has a first link and a second link provided on an upstream side of the first link in the transport direction. The seat portion supports the link mechanism. One end portion of the first link is rotatably supported by the other end portion of the support arm portion. Another end portion of the first link is rotatably supported by the seat portion. The first link is configured to rotate around the other end portion of the first link. One end portion of the second link is rotatably supported by a section of the support arm portion between the one end portion of the support arm portion and the other end portion of the support arm portion. Another end portion of the second link is rotatably supported by the seat portion. The second link is configured to rotate around the other end portion of the second link. When the upper transport roller is in the press position, the second link extends downward from the other end portion of the second link to the one end portion of the second link, and the first link extends toward the upstream side in the transport direction and downward from the other end portion of the first link to the one end portion of the first link. When the upper transport roller is in the standby position, the second link extends toward the downstream side in the transport direction and downward from the other end portion of the second link to the one end portion of the second link.

In the bonding device of the according to the first aspect, when the upper transport roller moves upward, a section that supports the one end portion of the second link is moved a upstream side in the transport direction by the link mechanism, and therefore, the one end portion of the support arm portion is unlikely to move toward the upstream side in the transport direction. Thus, the bonding device can reduce the amount of movement of the upper transport roller toward the upstream side in the transport direction when the upper transport roller moves upward, in comparison to the related art. In comparison to the related art, when the upper transport roller moves upward, the upper transport roller is less likely to interfere with another member disposed on the upstream side in the transport direction, and the bonding device can increase the amount of upward movement of the upper transport roller in comparison to the related art. The bonding device can enlarge a working space below the support arm portion in comparison to the related art, and can improve workability when arranging the upper sheet and the lower sheet on the bonding device.

In the bonding device according to the first aspect, an output shaft of the upper transport motor may be coaxial with a coupling shaft of the second link and the support arm portion. In comparison to a device in which the output shaft of the upper transport motor is not coaxial with the coupling shaft of the second link and the support arm portion, the bonding device can reduce an influence of a weight of the upper transport motor, when the upper transport roller moves upward or downward. In the bonding device, when the power is not transmitted from the actuator to the support arm portion in a state in which the upper transport roller is in the standby position, the one end portion of the support arm portion does not rapidly move downward due to the weight of the upper transport motor. Thus, the safety of the bonding device is higher than that of a device in which the support arm portion supports the upper transport motor and the output shaft of the upper transport motor is not coaxial with the coupling shaft of the second link and the support arm portion.

In the bonding device according to the first aspect, the upper transport motor may be supported by the support arm portion. In comparison to a device in which the upper transport motor is supported by a portion other than the support arm portion, the bonding device can simplify the structure that transmits the power of the upper transport motor to the upper transport roller. In the bonding device, when the upper transport roller moves upward or downward, a positional relationship between a rotation position of the output shaft of the upper transport motor and a rotation position of the upper transport roller is unlikely to change. Therefore, when the upper transport roller moves upward or downward, the bonding device can inhibit the upper transport roller from rotating due to a change in the aforementioned positional relationship.

In the bonding device according to the first aspect, the actuator may be an air cylinder extending in parallel to the transport direction. The bonding device has a smaller structure in the up-down direction, in comparison to when an actuator extending in the up-down direction is provided. The bonding device can expand the working space below the support arm portion in comparison to the related art, and can improve the workability when arranging the upper sheet and the lower sheet on the bonding device.

The bonding device according to the first aspect may further include a coupling link mechanism coupled to an output shaft of the air cylinder and to the support arm portion. The coupling link mechanism may have a third link. One end portion of the third link may be rotatably supported by the support arm portion. When the upper transport roller is in the press position, the third link may extend upward from one end portion of the third link to another end portion the third link. When the upper transport roller is in the press position, the bonding device can efficiently transmit the power of the actuator in the downward direction.

The bonding device according to the first aspect may further include an attachment portion configured to detachably attach an upper transport unit including the upper transport motor and the support arm portion to a main body portion of the bonding device. The attachment portion is connected to the seat portion. In the bonding device, the attachment portion can be attached to and detached from the main body portion of the bonding device. Therefore, in the bonding device, a maintenance operation can be performed by only detaching the upper transport unit.

In the bonding device according to the first aspect, the attachment portion has a unit position adjustment portion configured to adjust a position of the upper transport unit in the axial direction with respect to the bonding device. The bonding device can adjust the position of the upper transport roller in the left-right direction with respect to the nozzle.

The bonding device according to the first aspect may further include a detection portion and a detection portion position adjustment portion. The detection portion is configured to detect a position of the upper sheet in the axial direction. The detection portion is fixed to the seat portion. The detection portion is positioned on the upstream side of the nozzle in the transport direction when the upper transport unit is mounted on the main body portion of the bonding device. The detection portion position adjustment portion is configured to adjust a position of the detection portion in the axial direction with respect to the attachment portion. The bonding device can adjust the position of the detection portion in the axial direction with respect to the nozzle.

An upper transport unit according to the second aspect of the present invention includes an upper transport roller, an upper transport motor, and a support arm portion. The upper transport roller is configured to rotate around an upper roller shaft extending in an axial direction. The upper transport motor is configured to drive the upper transport roller. The support arm portion is configured to rotatably support the upper transport roller at one end portion of the support arm portion. The support arm portion is configured to swing around another end portion side of the support arm portion. The upper transport roller is movable by an actuator between a lower position and an upper position that is above the lower position. The bonding device is configured to bond a lower sheet and an upper sheet using an adhesive the bonding device is configured to transport the lower sheet and the upper sheet in a transport direction when the upper transport roller is in the lower position. The upper transport unit includes a link mechanism having a first link and a second link provided on an upstream side of the first link in the transport direction. The upper transport unit is supported by a seat portion. One end portion of the first link is rotatably supported by the other end portion of the support arm portion. Another end portion of the first link is rotatably supported by the seat portion. The first link is configured to rotate around the other end portion of the first link. One end portion of the second link is rotatably supported by a section of the support arm portion between the one end portion of the support arm portion and the other end portion of the support arm portion. Another end portion of the second link is rotatably supported by the seat portion. The second link is configured to rotate around the other end portion of the second link. When the upper transport roller is in the lower position, the second link extends downward from the other end portion of the second link to the one end portion of the second link, and the first link extends toward the upstream side in the transport direction and downward from the other end portion of the first link to the one end portion of the first link. When the upper transport roller is in the upper position, the second link extends toward the downstream side in the transport direction and downward from the other end portion of the second link to the one end portion of the second link.

In the upper transport unit according to the second aspect, when the upper transport unit is mount on the bonding device and the upper transport roller moves upward, a section that supports the one end portion of the second link is moved a upstream side in the transport direction by the link mechanism, and therefore, the one end portion of the support arm portion is unlikely to move toward the upstream side in the transport direction. Thus, the upper transport unit can reduce the amount of movement of the upper transport roller toward the upstream side in the transport direction when the upper transport roller moves upward, in comparison to the related art. In comparison to the related art, when the upper transport roller moves upward, the upper transport roller is less likely to interfere with another member disposed on the upstream side in the transport direction, and the upper transport unit can increase the amount of upward movement of the upper transport roller in comparison to the related art. The upper transport unit can enlarge a working space below the support arm portion in comparison to the related art, and can improve workability when arranging the upper sheet and the lower sheet on the bonding device.

### BRIEF DESCRIPTION OF THE DRAWINGS

Embodiments will be described below in detail with reference to the accompanying drawings in which:
FIG. 1 is a perspective view of a bonding device 1;
FIG. 2 is a back view of the bonding device 1;
FIG. 3 is a left side view of the bonding device 1;
FIG. 4 is a perspective view of an internal configuration of the bonding device 1;
FIG. 5 is a perspective view of an upper transport unit 30 when an upper transport roller 12 is in a press position;
FIG. 6 is a left side view of the upper transport unit 30 when the upper transport roller 12 is in the press position;
FIG. 7 is an exploded perspective view of an upper transport mechanism 31;
FIG. 8 is a right side view of the upper transport mechanism 31 excluding an actuator 100 when the upper transport roller 12 is in the press position;
FIG. 9 is a cross-sectional view taken along a line A-A shown in FIG. 8;
FIG. 10 is a perspective view of the upper transport mechanism 31 excluding an upper transport motor 71 and a support seat 85 when the upper transport roller 12 is in a standby position (an upper diagram) and when the upper transport roller 12 is in the press position (a lower diagram);
FIG. 11 is a right side view of the upper transport mechanism 31 excluding the upper transport motor 71 and the support seat 85 when the upper transport roller 12 is in the standby position (an upper diagram) and when the upper transport roller 12 is in the press position (a lower diagram); and
FIG. 12 is a left side view of the upper transport mechanism 31 excluding the upper transport motor 71 and the support seat 85 when the upper transport roller 12 is in the standby position (an upper diagram) and when the upper transport roller 12 is in the press position (a lower diagram).

### DETAILED DESCRIPTION OF EXEMPLARY EMBODIMENTS

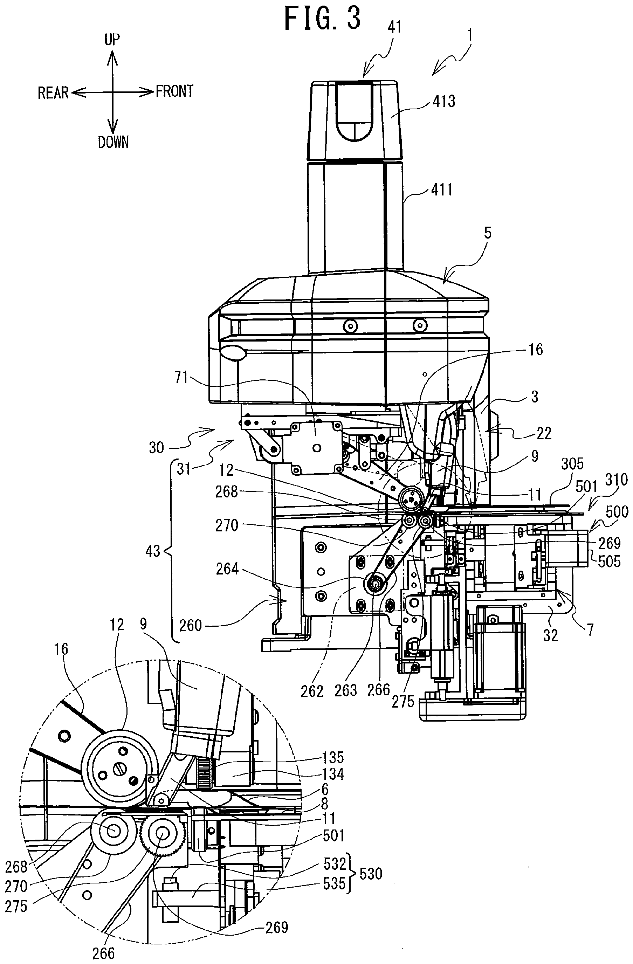

An embodiment of the present invention will be explained. In the following explanation, left and right directions, front and rear directions, and up and down directions as indicated by arrows in the drawings are used. A bonding device 1 bonds two sheets using an adhesive. The two sheets are a lower sheet 8 and an upper sheet 6. The upper sheet 6 is overlapped on the lower sheet 8 from above. The lower sheet 8 and the upper sheet 6 are flexible cloths, for example. The bonding device 1 bonds the right end portion of the lower sheet 8 and the left end portion of the upper sheet 6, via the adhesive. The lower sheet 8 and the upper sheet 6 are shown in FIG. 3 only.

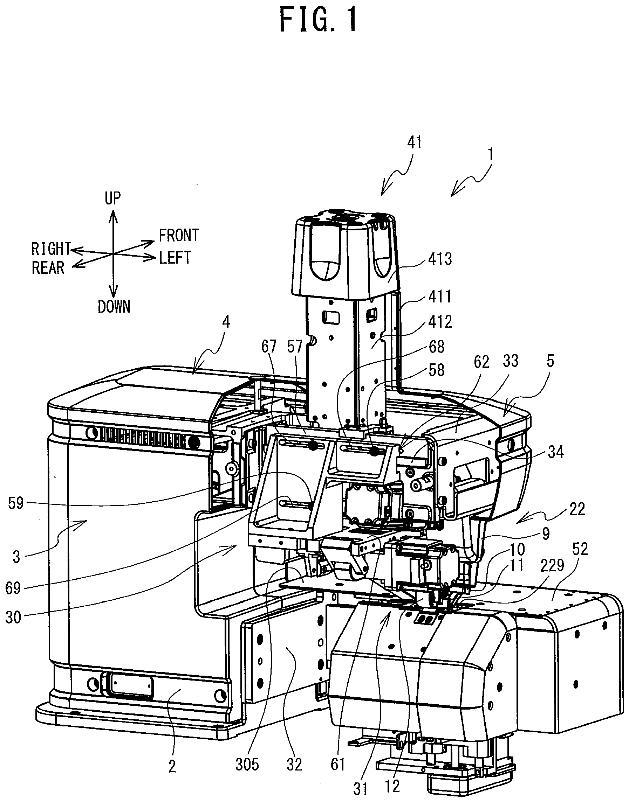

The configuration of the bonding device 1 will be explained with reference to FIG. 1 to FIG. 12. As shown in FIG. 1 to FIG. 4, the bonding device 1 is provided with a seat portion 2, a pillar 3, an arm portion 4, a head portion 5, a base 7, a mounting portion 41, a nozzle 11, a supply mechanism 45, a transport mechanism 43, an upper detection portion 140, an upper clamp mechanism 130, an upper support mechanism 310, a lower detection mechanism 530 and a lower clamp mechanism 500. The seat portion 2 has a cuboid shape and is fixed to a work bench. The pillar 3 has a columnar shape and extends upward from the upper surface of the seat portion 2. The arm portion 4 extends to the left from the upper end portion of the pillar 3. The head portion 5 protrudes to the left from the left end portion of the arm portion 4. The base 7 extends in the left-right direction at the left of the seat portion 2. The base 7 is supported by a rectangular plate-shaped fixing portion 32 that is fixed to the left surface of the seat portion 2. A support portion 52 is fixed to the upper end of the base 7. The support portion 52 extends in the left-right direction and the front-rear direction. A left portion of the support portion 52 has a substantially rectangular shape in a plan view, and supports the lower sheet 8 from below. The support portion 52 faces the head portion 5.

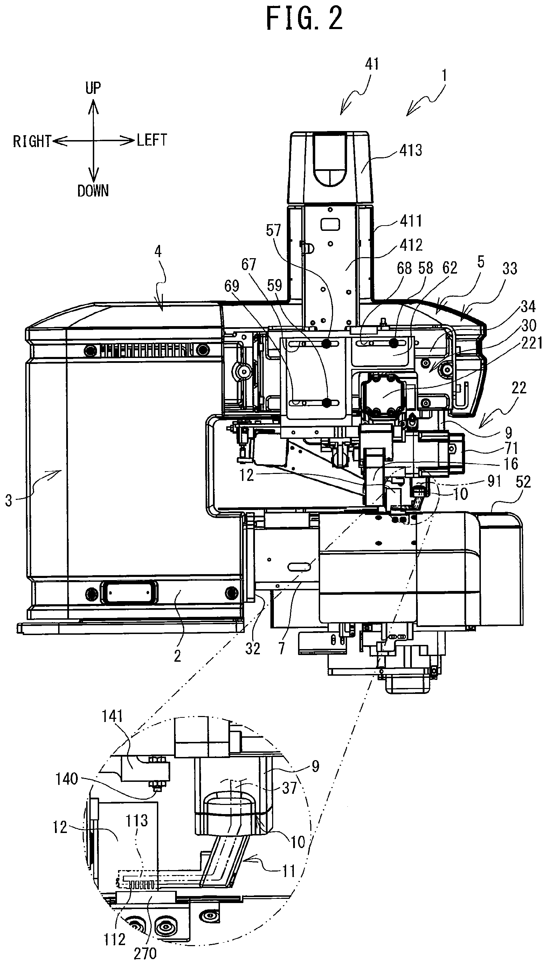

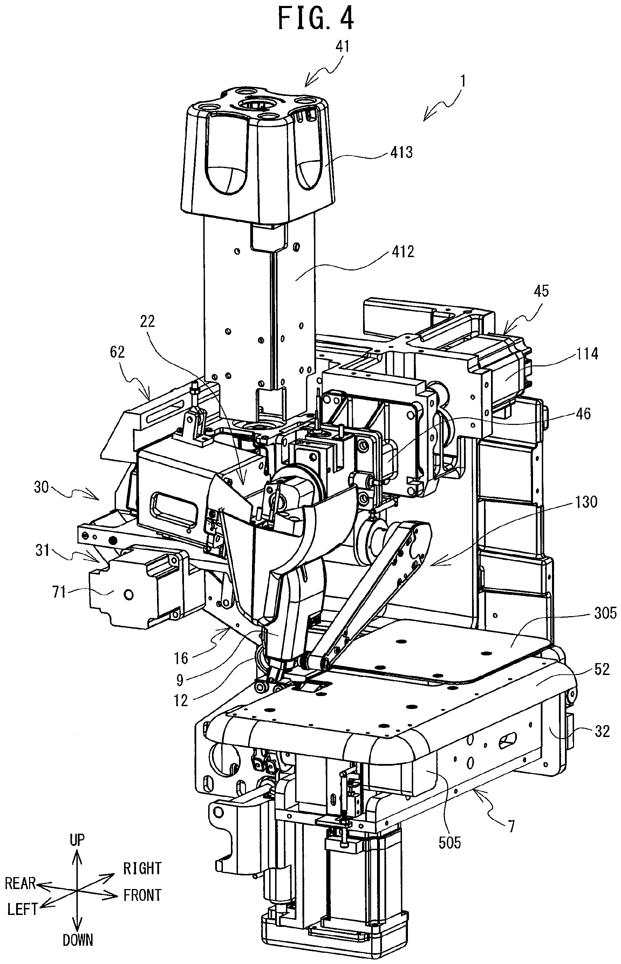

The mounting portion 41 is provided at a substantially central portion of the head portion 5, and a cartridge is detachably mounted in the mounting portion 41. The cartridge stores a hot-melt adhesive. The mounting portion 41 is provided with a cover 411, a housing portion 412, a lid 413 and a heater. The cover 411 has a substantially cuboid box shape and extends upward from the upper surface of the head portion 5. The cover 411 is only partially shown in FIG. 1 and FIG. 2, and the cover 411 is omitted in FIG. 4. The cover 411 opens in the up-down direction. The housing portion 412 is provided inside the cover 411. The housing portion 412 has a substantially cuboid box shape and extends from the interior of the head portion 5 to the upper end of the cover 411. The housing portion 412 is open upward. The cartridge is housed inside the housing portion 412. The adhesive liquefies at a predetermined temperature and solidifies at a temperature lower than the predetermined temperature. The lid 413 covers the housing portion 412 from above. The heater is provided in the housing portion 412 and heats the adhesive. The adhesive is melted and liquefied by being heated.

The nozzle 11 is provided between the lower sheet 8 and the upper sheet 6 that is overlapped on the lower sheet 8 from above. The nozzle 11 has a discharge port 112 that discharges the adhesive toward the lower sheet 8. As shown in FIG. 2, the nozzle 11 is provided below the head portion 5, and has a rectangular shape that extends in the left-right direction. The nozzle 11 is provided with the discharge port 112 and a flow path 113. The discharge port 112 is provided in the lower surface of the nozzle 11, and has a plurality of circular holes that are aligned at substantially equal intervals in the left-right direction. The flow path 113 extends in the left-right direction. The nozzle 11 discharges the adhesive in the flow path 113 from the discharge port 112 onto the lower sheet 8.

A swing mechanism 22 is provided with a motor 221 and a lever 9, and is configured to swing the lever 9 around an axis line that extends in the left-right direction. The motor 221 is a pulse motor that is provided in the head portion 5. An output shaft of the motor 221 is directed in the front-rear direction. The lever 9 is coupled with the output shaft of the motor 221 via a coupling mechanism, and has an arm shape that extends downward from the lower end of the head portion 5. The nozzle 11 is detachably mounted on the lower end of the lever 9. As shown in FIG. 3, using the power of the motor 221, the lever 9 can displace the nozzle 11 between a facing position shown by a solid line and a separated position shown by a two-dot chain line. When the nozzle 11 is in the facing position, the discharge port 112 is directed downward and faces the lower sheet 8 from above. The separated position is a position on the counterclockwise side in a left side view around the axis line that extends in the left-right direction, with respect to the facing position. When the nozzle 11 is in the separated position, the discharge port 112 is directed forward and downward. As shown in FIG. 2, the lever 9 is internally provided with a flow path 37 and a heater. The lower end portion of the lever 9 is a mounting portion 10. The nozzle 11 protrudes downward from the mounting portion 10 and further protrudes to the right. The nozzle 11 is fixed to the mounting portion 10 using screws. The flow path 113 of the nozzle 11 is communicated with the flow path 37. The heater of the lever 9 heats the adhesive flowing through the flow path 37. A plurality of types of the nozzles 11, whose sizes and shapes are different from each other, can be selectively mounted on the mounting portion 10.

As shown in FIG. 4, the supply mechanism 45 is configured to supply the adhesive to the nozzle 11. The supply mechanism 45 supplies the adhesive in the cartridge mounted in the mounting portion 41 to the nozzle 11. The supply mechanism 45 is provided with a pump motor 114 and a gear pump 46 inside the arm portion 4. An output shaft of the pump motor 114 is coupled to the gear pump 46 via a gear. The gear pump 46 sucks up the adhesive from the cartridge housed in the housing portion 412. The gear pump 46 supplies the sucked up adhesive to the nozzle 11 via the lever 9.

As shown in FIG. 3, the transport mechanism 43 is configured to transport the lower sheet 8 to which the adhesive has been applied and the upper sheet 6. The transport mechanism 43 transports the lower sheet 8 and the upper sheet 6 from the front side to the rear side. More specifically, a transport direction of the lower sheet 8 and the upper sheet 6 is the rearward direction, an upstream side in the transport direction is the front side, and a downstream side in the transport direction is the rear side. The transport mechanism 43 is provided with a lower transport mechanism 260 and an upper transport mechanism 31.

The lower transport mechanism 260 faces the head portion 5 and is provided to the left of the seat portion 2. The lower transport mechanism 260 is provided with a lower transport roller 270, a lower transport motor 262, a pulley 264, a transport shaft 268, a roller shaft 269, a belt 266 and an under-nozzle roller 275.

The lower transport roller 270 is configured to rotate around the transport shaft 268 on the downstream side in the transport direction of the lower sheet 8 and the upper sheet 6 with respect to the nozzle 11, and is configured to come into contact with the lower sheet 8 from below. The transport shaft 268 extends such that its axial direction is the left-right direction that is orthogonal to the transport direction and the up-down direction. The lower transport roller 270 has a cylindrical shape. The lower transport motor 262 is configured to drive the lower transport roller 270. The lower transport motor 262 is provided with an output shaft 263 that extends in the left-right direction. The pulley 264 is fixed to the left end portion of the output shaft 263. The transport shaft 268 extends in the left-right direction, below an exposure hole 229 (refer to FIG. 1) provided in the support portion 52. A first coupling pulley is fixed to the transport shaft 268.

The roller shaft 269 extends in the left-right direction. The roller shaft 269 is provided to the front of the transport shaft 268 and below the support portion 52. A second coupling pulley is fixed to the roller shaft 269. The shape of the second coupling pulley is the same as the shape of the first coupling pulley. The belt 266 is stretched around the pulley 264, the first coupling pulley and the second coupling pulley. The lower transport roller 270 is fixed to the transport shaft 268 at the left of the first coupling pulley, and protrudes upward from the exposure hole 229. The lower transport roller 270 rotates together with the transport shaft 268, with its axial direction being the left-right direction. The lower transport roller 270 comes into contact with an upper transport roller 12 (to be described later) in a press position, from below.

The under-nozzle roller 275 is fixed to the roller shaft 269 at the left of the second coupling pulley, and rotates together with the roller shaft 269, with its axial direction being the left-right direction. An outer peripheral surface of the under-nozzle roller 275 has a plurality of grooves that extend in the left-right direction over the circumferential direction. The outer diameter of the under-nozzle roller 275 is the same as the outer diameter of the lower transport roller 270. When the nozzle 11 is in the facing position, the upper end of the under-nozzle roller 275 faces the discharge port 112 with a gap therebetween. Using the power of the lower transport motor 262, the lower transport mechanism 260 rotates the lower transport roller 270 and the under-nozzle roller 275. An outer peripheral surface of the lower transport roller 270 and the outer peripheral surface of the under-nozzle roller 275 rotate in the same direction and at the same speed around their respective centers of rotation.

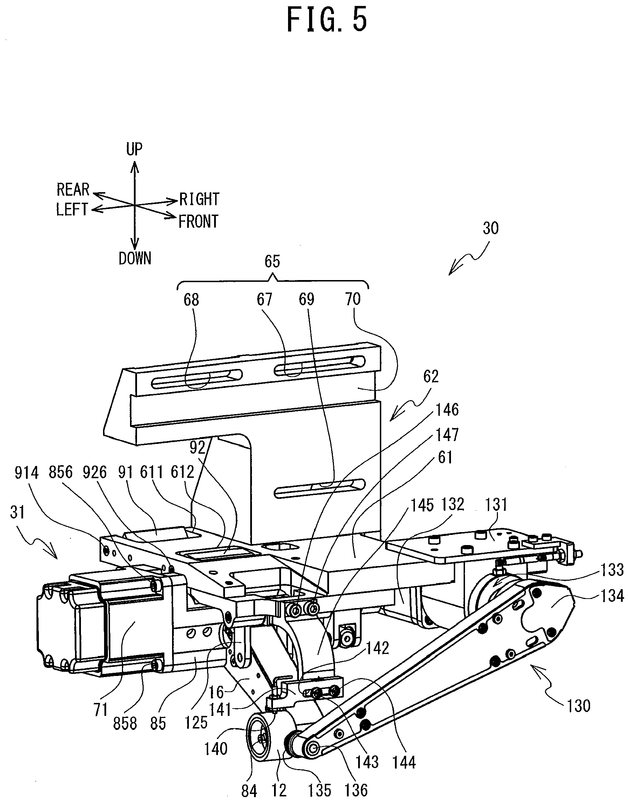

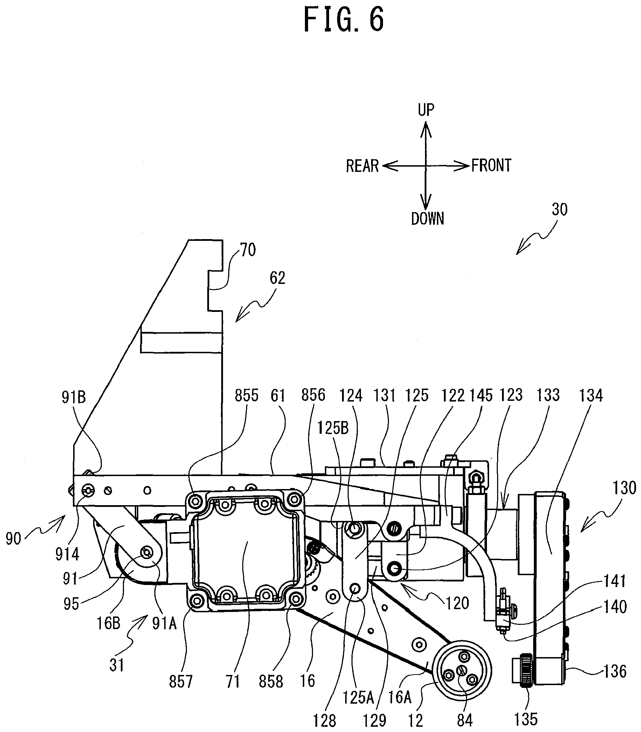

As shown in FIG. 1 to FIG. 3, the upper transport mechanism 31 is provided in the upper transport unit 30. The upper transport unit 30 is configured to be detachably mounted on a main body portion 33 of the bonding device 1. The main body portion 33 is a frame body that forms the head portion 5. As shown in FIG. 5 and FIG. 6, the upper transport unit 30 is provided with a seat portion 61, an attachment portion 62, the upper transport mechanism 31, the upper detection portion 140 and the upper clamp mechanism 130. The seat portion 61 has a plate shape and extends horizontally. The attachment portion 62 is used to detachably attach the upper transport unit 30, which includes the upper transport mechanism 31, to the main body portion 33 of the bonding device 1. The attachment portion 62 extends upward from the rear right end of the seat portion 61, and bends to the left on the upper side. The attachment portion 62 has a right-angled triangular shape in a left side view, and has an inclined plane on the rear side. The upper surface of the attachment portion 62 extends horizontally.

The attachment portion 62 has a unit position adjustment portion 65 that is configured to adjust the position of the upper transport unit 30 in the axial direction (the left-right direction) with respect to the bonding device 1. The unit position adjustment portion 65 has long holes 67 to 69 that extend in the left-right direction, and a guide portion 70. The long holes 67 to 69 have the same shape as each other, and penetrate in the front-rear direction. The upper transport unit 30 is fixed to the main body portion 33 of the bonding device 1, by tightening screws 57 to 59 inserted through the long holes 67 to 69 into screw holes provided in the main body portion 33 of the bonding device 1. The long holes 67 and 68 are arranged side by side in the left-right direction on an upper portion of the attachment portion 62. The long hole 67 is located to the right of the long hole 68. The long hole 69 is located below the long hole 67. The guide portion 70 has a groove shape and extends in the left-right direction. The guide portion 70 is provided between the long hole 69 and the long holes 67 and 68 in the up-down direction. The guide portion 70 is engaged with a convex portion 34 that is provided on the main body portion 33 of the bonding device 1. The convex portion 34 extends in the left-right direction in an inner rear portion of the head portion 5, and protrudes to the rear.

When the upper transport unit 30 is mounted on the main body portion 33 of the bonding device 1, the attachment portion 62 is located inside the head portion 5. The unit position adjustment portion 65 is configured to adjust the position of the upper transport unit 30 in the left-right direction with respect to the bonding device 1, by adjusting the position of the long holes 67 to 69 with respect to the screws 57 to 59. At the time of adjustment, an operator loosens the screws 57 to 59 to an extent that inhibits the screws 57 to 59 from falling out from the long holes 67 to 69. At this time, the upper transport unit 30 can move to the left and the right. After moving the upper transport unit 30 to a desired position in the left-right direction, the operator once again tightens the screws 57 to 59. By removing the screws 57 to 59, the operator can remove the upper transport unit 30 from the main body portion 33 of the bonding device 1.

As shown in FIG. 3 to FIG. 8, the upper transport mechanism 31 is provided with the upper transport roller 12, a support arm portion 16, an upper transport motor 71, a link mechanism 90 and an actuator 100. The upper transport roller 12 is configured to rotate around an upper roller shaft 84 that extends in the axial direction, and clamps, from above, the lower sheet 8 and the upper sheet 6 between the upper transport roller 12 and the lower transport roller 270. The axial direction of the upper roller shaft 84 is the left-right direction. The upper transport roller 12 is positioned to the rear of the nozzle 11. The upper transport roller 12 is configured to be moved by the actuator 100 to the press position and a standby position, integrally with a front end portion 16A of the support arm portion 16. As shown by the solid line in FIG. 3, the press position is a position at which the upper transport roller 12 presses the upper sheet 6 and the lower sheet 8 between the upper transport roller 12 and the lower transport roller 270. As shown by the two-dot chain line in FIG. 3, the standby position is a position at which the upper transport roller 12 is above the press position. The support arm portion 16 extends in the front-rear direction, and rotatably supports the upper transport roller 12 at the front end portion 16A. The support arm portion 16 is configured to swing around a rear end portion 16B side. The support arm portion 16 has a pair of left and right plate portions 161 and 162.

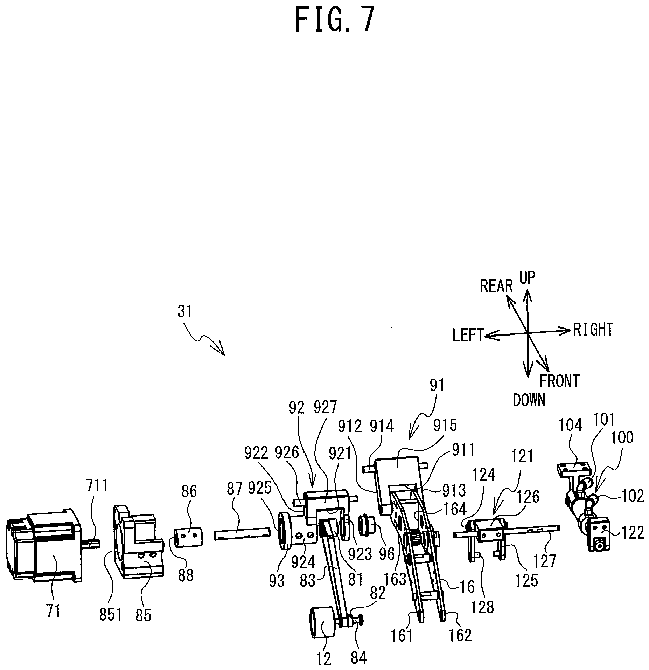

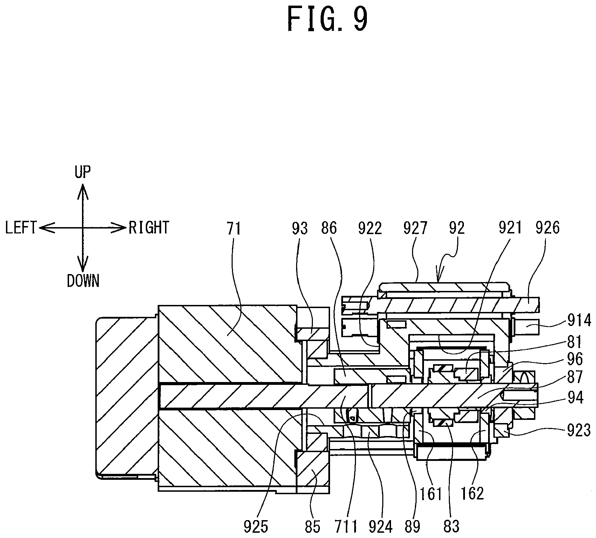

The upper transport motor 71 is configured to drive the upper transport roller 12. The upper transport motor 71 is provided on the support arm portion 16. As shown in FIG. 7 and FIG 9, an output shaft 711 of the upper transport motor 71 protrudes to the right, and is coupled to the upper roller shaft 84 via a coupling shaft 87, a coupling member 86, a first pulley 81, a second pulley 82 and a timing belt 83. The coupling shaft 87 extends in the left-right direction at the right of the output shaft 711. The coupling member 86 is a cylindrical member having a hole 88 that extends in the left-right direction. The output shaft 711 and the coupling shaft 87 are inserted through the hole 88, and thus the coupling member 86 couples the right end of the output shaft 711 and the left end of the coupling shaft 87. The coupling shaft 87 rotates integrally with the output shaft 711. The coupling shaft 87 is supported by the support arm portion 16 via bearings 89 and 94. The plate portions 161 and 162 of the support arm portion 16 have circular holes 163 and 164 that penetrate in the left-right direction. The bearings 89 and 94 are respectively fitted into the holes 163 and 164 and are thus supported by the plate portions 161 and 162. The coupling shaft 87 can rotate relative to the support arm portion 16 due to the bearings 89 and 94. The first pulley 81 is provided on the coupling shaft 87 between the bearings 89 and 94. The second pulley 82 is supported by the upper roller shaft 84 and is aligned with the upper transport roller 12 in the left-right direction. The timing belt 83 is stretched between the first pulley 81 and the second pulley 82. The first pulley 81, the second pulley 82 and the timing belt 83 are provided between the plate portions 161 and 162.

As shown in FIG. 7 to FIG. 9, the link mechanism 90 has a first link 91 and a second link 92. A lower end portion 91A of the first link 91 is rotatably supported by the rear end portion 16B of the support arm portion 16, and the first link 91 is configured to rotate around an upper end portion 91B. The first link 91 has an inverted U shape in a front view, and is provided with a main body portion 915, a concave portion 911, arm portions 912 and 913, and coupling shafts 914 and 95. The main body portion 915 is an upper portion of the first link 91. The concave portion 911 is a portion that is recessed upward from the lower end of the first link 91. The concave portion 911 is located between the arm portions 912 and 913 in the left-right direction. The arm portion 912 extends downward from a lower left portion of the main body portion 915. The arm portion 913 extends downward from a lower right portion of the main body portion 915. The support arm portion 16 is disposed in the concave portion 911 of the first link 91. The arm portion 912 is located to the left of the plate portion 161. The arm portion 913 is located to the right of the plate portion 162. The coupling shaft 95 extends in the left-right direction between the arm portion 912 and the arm portion 913. The coupling shaft 95 is inserted through holes of the plate portions 161 and 162. The first link 91 supports the support arm portion 16 from both sides of the support arm portion 16 in the left-right direction. The coupling shaft 914 has a rod shape and extends in the left-right direction. The coupling shaft 914 penetrates a hole in an upper portion of the main body portion 915. As shown in FIG. 5 and FIG. 6, the coupling shaft 914 is supported by a concave portion 611 of the seat portion 61. The concave portion 611 is provided in a rear left portion of the seat portion 61, and is a portion that is recessed forward from the rear end portion of the seat portion 61. The seat portion 61 supports the first link 91 such that the first link 91 is configured to rotate around the coupling shaft 914.

A lower end portion 92A of the second link 92 is rotatably supported by a section of the support arm portion 16 between the front end portion 16A and the rear end portion 16B of the support arm portion 16, and the second link 92 is configured to rotate around an upper end portion 92B of the second link 92. The second link 92 is provided on the upstream side in the transport direction with respect to the first link 91. The second link 92 has an inverted U shape in a front view, and is provided with a main body portion 927, a concave portion 921, arm portions 922 and 923, a coupling shaft 926 and the coupling shaft 87. The main body portion 927 is an upper portion of the second link 92. The concave portion 921 is a portion that is recessed upward from the lower end of the second link 92. The concave portion 921 is located between the arm portions 922 and 923 in the left-right direction. The arm portion 922 extends downward from a lower left portion of the main body portion 927. The arm portion 923 extends downward from a lower right portion of the main body portion 927. The support arm portion 16 is disposed in the concave portion 921 of the second link 92. The arm portion 922 is located to the left of the plate portion 161. The arm portion 923 is located to the right of the plate portion 162.

The lower end portion of the arm portion 922 has a holding portion 924. The holding portion 924 has a cylindrical shape and has a hole 925 that extends in the left-right direction. The holding portion 924 holds the output shaft 711, the coupling shaft 87 and the coupling member 86 in the hole 925. In other words, the output shaft 711 of the upper transport motor 71 is coaxial with the coupling shaft 87 of the second link 92 and the support arm portion 16. The left end portion of the holding portion 924 is supported by a support seat 85 via a bearing 93. The support seat 85 is provided to the right of the upper transport motor 71, and is a cylindrical member having a hole 851 that extends in the left-right direction. Four corners of the upper transport motor 71 are fixed to a left portion of the support seat 85 using screws 855 to 858. The bearing 93 is fitted into the hole 851. The support seat 85 holds the holding portion 924 of the second link 92 via the bearing 93. In other words, the upper transport motor 71 is provided on the support arm portion 16 via the support seat 85, the bearing 93, the second link 92, the coupling member 86, the coupling shaft 87 and the bearings 89 and 94.

As shown in FIG. 9, the arm portion 923 supports a bearing 96. The right end of the coupling shaft 87 is supported by the bearing 96. In other words, the coupling shaft 87 is inserted through the holding portion 924, the plate portions 161 and 162 and the arm portion 923. The coupling shaft 87 is positioned to the rear of the center of the support arm portion 16 in the front-rear direction. The second link 92 supports the support arm portion 16 from both the sides of the support arm portion 16 in the left-right direction. The coupling shaft 926 has a rod shape and extends in the left-right direction. The coupling shaft 926 penetrates a hole positioned in an upper portion of the main body portion 927. As shown in FIG. 5, the coupling shaft 926 is supported by a hole portion 612 of the seat portion 61. The hole portion 612 is a portion that penetrates the seat portion 61 in the up-down direction, and has a substantially rectangular shape in a plan view. The hole portion 612 is provided to the front of the concave portion 611. The seat portion 61 supports the second link 92 such that the second link 92 is configured to rotate around the coupling shaft 926.

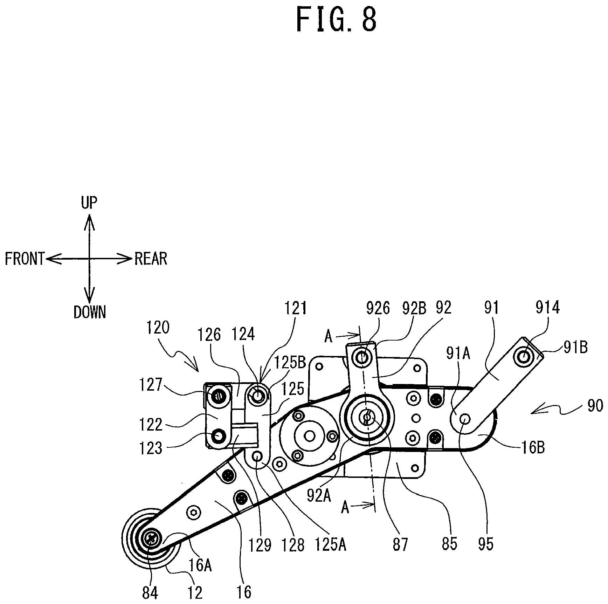

As shown in FIG. 8, the first link 91 and the second link 92 form a four-joint link mechanism together with the support arm portion 16. The coupling shaft 914 of the first link 91 and the coupling shaft 926 of the second link 92 are fixed ends. The coupling shaft 95 of the first link 91 and the support arm portion 16, and the coupling shaft 87 of the second link 92 and the support arm portion 16 are free ends.

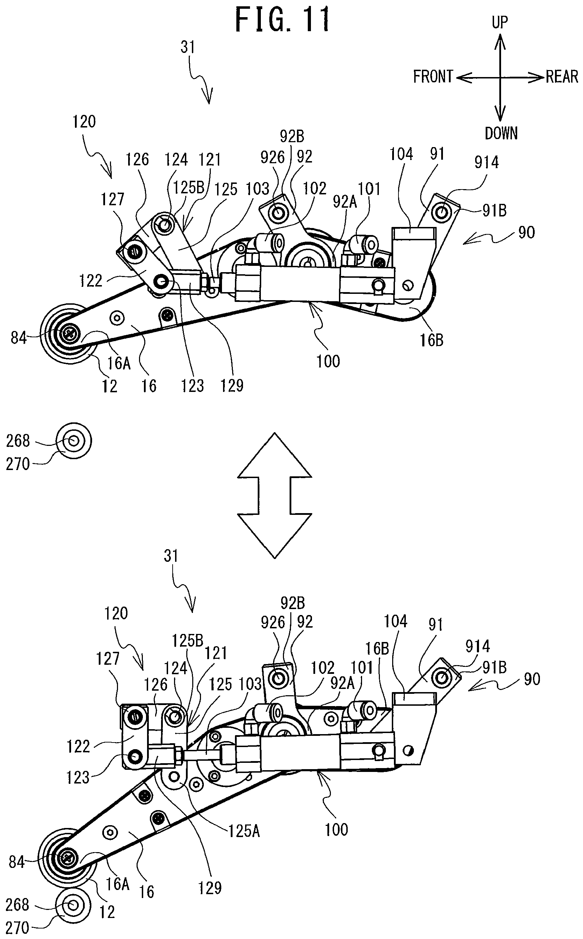

As shown in FIG. 7 and FIG. 11, the actuator 100 is configured to move the front end portion 16A of the support arm portion 16 up and down, by transmitting power to the support arm portion 16 via a coupling link mechanism 120. The actuator 100 is an air cylinder that extends in parallel to the transport direction of the upper sheet 6. The actuator 100 is provided with connection ports 101 and 102, a piston, an output shaft 103 and a fixing portion 104. The connection ports 101 and 102 are connected to a compressor via pipes. A control portion (not shown in the drawings) of the bonding device 1 controls electromagnetic valves (not shown in the drawings) provided in the pipes, and thus controls the driving of the actuator 100. The piston is provided inside the actuator 100 and is coupled to the output shaft 103. The output shaft 103 is directed forward. The output shaft 103 moves to the front and the rear due to air that is introduced and expelled via the connection ports 101 and 102. The fixing portion 104 is a portion that extends upward, and is provided on a rear portion of the actuator 100. The fixing portion 104 is used to fix the actuator 100 to the lower surface of the seat portion 61.

As shown in FIG. 8, FIG. 10 and FIG. 11, the coupling link mechanism 120 is coupled to the output shaft 103 of the actuator 100 and to the support arm portion 16. The coupling link mechanism 120 has third links 125, a fourth link 122, a fifth link 126, coupling shafts 123, 127, 124 and 128, and a coupling portion 129. The coupling shafts 123, 127, 124 and 128 each have a rod shape that extends in the left-right direction. The third links 125 are a pair of left and right plates that extend in the up-down direction from both the sides of the support arm portion 16 in the left-right direction. A lower end portion 125A of each of the third links 125 is rotatably supported by the support arm portion 16. The lower end portion 125A of each of the third links 125 is provided with the coupling shaft 128 that protrudes toward the support arm portion 16. The coupling shafts 128 are respectively inserted into holes that penetrate the plate portions 161 and 162 of the support arm portion 16 in the left-right direction. An upper end portion 125B of each of the third links 125 is coupled to the rear end of the fifth link 126 by the coupling shaft 124. The fifth link 126 is a plate-shaped member and is positioned between the pair of left and right third links 125. The front end portion of the fifth link 126 is fixed to the coupling shaft 127, and is coupled to the upper end of the fourth link 122 by the coupling shaft 127. The coupling shaft 127 is rotatably supported by the seat portion 61. The fourth link 122 is located to the right of a left link portion 121. The left link portion 121 is a link including the third links 125, the fifth link 126 and the coupling shaft 124. The fourth link 122 is a rectangular plate-shaped member, and the lower end portion of the fourth link 122 has a concave portion that is recessed upward. The lower end portion of the fourth link 122 is coupled to the front end of the coupling portion 129 by the coupling shaft 123. The coupling portion 129 is disposed in the concave portion of the fourth link 122. The coupling portion 129 extends in the front-rear direction and is coupled to the output shaft 103 of the actuator 100.

In accordance with a detection result by the upper detection portion 140, the bonding device 1 adjusts the position, in the left-right direction, of the left end portion of the upper sheet 6 using the upper clamp mechanism 130. As shown in FIG. 5 and FIG. 6, the upper clamp mechanism 130 is provided with a fixing base 131, a motor 132, a coupling mechanism 133, an arm portion 134 and a roller 135. The fixing base 131 is a plate-shaped member. The fixing base 131 is used to fix the upper clamp mechanism 130 to the right end of the seat portion 61. The motor 132 is a stepping motor that is configured to rotate forward and backward. An output shaft of the motor 132 is directed forward. The coupling mechanism 133 is coupled to the output shaft of the motor 132 and the arm portion 134. The arm portion 134 extends leftward and downward from a coupling portion with the coupling mechanism 133, and rotatably supports the roller 135 at the left end portion of the arm portion 134. The arm portion 134 is internally provided with a transmission mechanism that is coupled to the output shaft of the motor 132 and a shaft 136 of the roller 135. The power of the motor 132 is transmitted to the roller 135 via the transmission mechanism. When the upper transport unit 30 is mounted on the main body portion 33 of the bonding device 1, the upper detection portion 140 is positioned to the front of the nozzle 11, i.e., on the upstream side of the nozzle 11 in the transport direction. The upper detection portion 140 is configured to detect whether or not the left end portion of the upper sheet 6 is located above a specified position. The specified position is a predetermined position in the front-rear direction that is between the discharge port 112 of the nozzle 11 in the facing position and the roller 135, and is a position to the left of the roller 135. The upper detection portion 140 is a well-known optical sensor and is provided with a light emitting portion and a light receiving portion. The light emitting portion and the light receiving portion are provided at same height positions. The light emitting portion is configured to emit light toward the specified position that is below the light emitting portion. The light receiving portion is configured to receive the light emitted by the light emitting portion. When the upper sheet 6 is not located at the specified position, the light emitted by the light emitting portion is reflected by a reflection portion provided on the upper surface of a support base 305 to be described later, and the light receiving portion can receive the light emitted by the light emitting portion. When the upper sheet 6 is located at the specified position, the upper sheet 6 blocks the light emitted by the light emitting portion, and the light receiving portion cannot receive the light emitted by the light emitting portion. Therefore, the upper detection portion 140 can detect whether or not the left end portion of the upper sheet 6 is located above the specified position.

The upper detection portion 140 is fixed to the seat portion 61 via a support member 141 and a fixing member 145. The support member 141 has a detection portion position adjustment portion 142 and is configured to adjust the position of the upper detection portion 140 in the left-right direction with respect to the attachment portion 62. The support member 141 is a plate-shaped member that extends in the left-right direction. The support member 141 supports the upper detection portion 140 such that the upper detection portion 140 is inserted through a hole, which is provided in the left end portion of the support member 141 and penetrates in the up-down direction, in a posture in which the light emitting portion and the light receiving portion are directed downward. The support member 141 is provided with the detection portion position adjustment portion 142 to the right of the upper detection portion 140. The detection portion position adjustment portion 142 is a long hole that extends in the left-right direction and that penetrates in the front-rear direction. The fixing member 145 is a plate-shaped member that is long in the up-down direction. The position of the fixing member 145 in the left-right direction is to the right of the upper detection portion 140 and the upper transport roller 12. The fixing member 145 has a shape such that it curves forward as it extends downward. The upper end of the fixing member 145 is fixed to the front end of the seat portion 61 using a pair of left and right screws 146 and 147. The lower end portion of the fixing member 145 has a pair of left and right screw holes. Two screws 143 and 144 that are inserted through the detection portion position adjustment portion 142 are tightened into the pair of left and right screw holes, respectively. Thus, the support member 141 is fixed to the fixing member 145.

When adjusting the position of the upper detection portion 140 in the left-right direction with respect to the attachment portion 62, the operator loosens the screws 143 and 144 to an extent that inhibits the screws 143 and 144 from falling out from the detection portion position adjustment portion 142. The support member 141 is configured to move to the left and the right with respect to the attachment portion 62. After moving the support member 141 to a desired position in the left-right direction, the operator once again tightens the screws 143 and 144.

As shown in FIG. 3, the upper support mechanism 310 is provided on the base 7 and is provided with the support base 305. The support base 305 has a plate shape that extends horizontally, and supports the upper sheet 6. The support base 305 can be displaced in the left-right direction. The lower detection mechanism 530 is configured to detect whether or not the right end portion of the lower sheet 8 is located at the specified position. The lower detection mechanism 530 is provided with a fixing member 535 and a lower detection portion 532. The lower detection portion 532 is a well-known optical sensor that is fixed to the fixing member 535, and is provided with a light emitting portion and a light receiving portion. The light emitting portion and the light receiving portion are provided at same height positions. The light emitting portion is configured to emit light toward an inside area of a through hole that is provided in the support portion 52 and that penetrates in the up-down direction. When the lower sheet 8 is not located above the through hole, the light emitted by the light emitting portion is reflected by a reflection portion provided on the lower surface of the support base 305, and the light receiving portion is configured to receive the light emitted by the light emitting portion. When the lower sheet 8 is located above the through hole, the lower sheet 8 blocks the light emitted by the light emitting portion, and the light receiving portion cannot receive the light emitted by the light emitting portion. Therefore, the lower detection portion 532 can detect whether or not the right end portion of the lower sheet 8 is located at the specified position above the through hole.

The lower clamp mechanism 500 is configured to move the right end portion of the lower sheet 8 to the left and the right. The lower clamp mechanism 500 is provided with a motor 505, an arm portion, a coupling mechanism and a roller 501. The motor 505 is a motor that is configured to rotate forward and backward. An output shaft of the motor 505 is directed rearward. The arm portion extends rightward and upward from the rear of the motor 505, and is internally provided with a transmission mechanism that is coupled to the output shaft of the motor 505 and a shaft of the roller 501. The power of the motor 505 is transmitted to the roller 501 via the transmission mechanism. In other words, the motor 505 is configured to drive the roller 501.

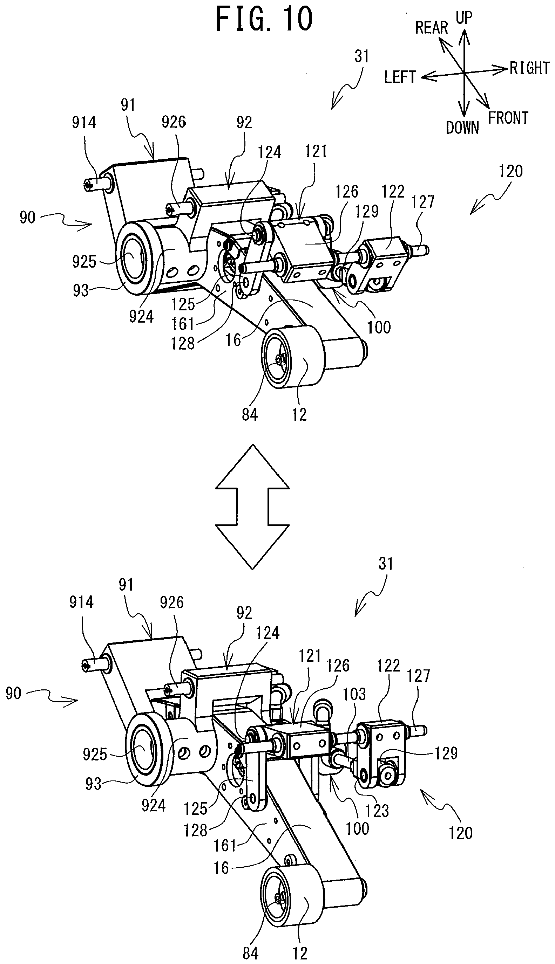

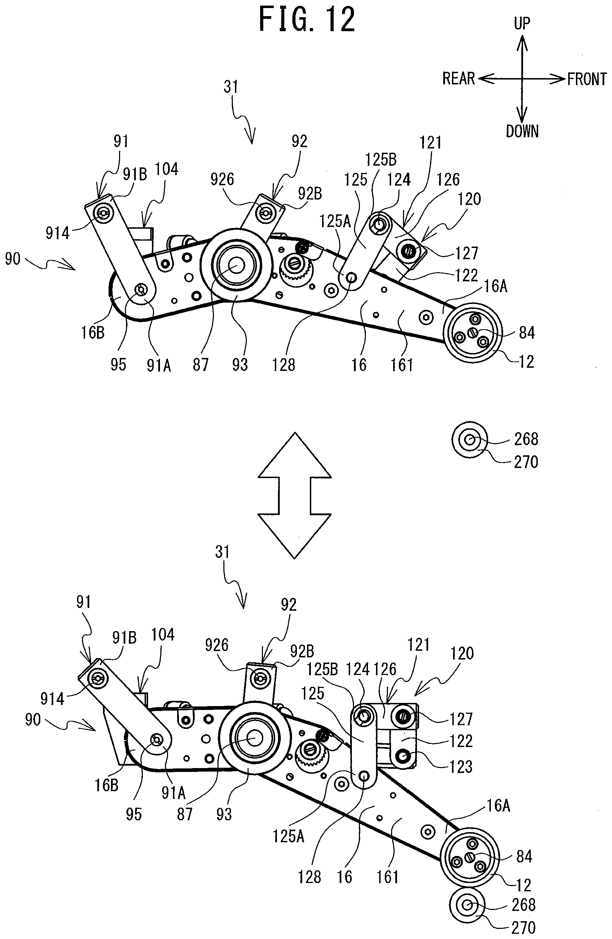

Operations of the upper transport mechanism 31 that moves the upper transport roller 12 up and down will be explained with reference to FIG. 10 to FIG. 12. As shown by a lower section of FIG. 11 and a lower section of FIG. 12, when the upper transport roller 12 is in the press position, each of the third links 125 extends upward from the lower end portion 125A to the upper end portion 125B. At this time, the second link 92 extends substantially downward from the upper end portion 92B to the lower end portion 92A, and the first link 91 extends toward the upstream side in the transport direction and downward from the upper end portion 91B, which is coupled to the seat portion 61 to the lower end portion 91A, which is coupled to the support arm portion 16. At this time, the direction from the fixed end toward the free end of the second link 92 need not necessarily strictly be the downward direction. When the upper transport roller 12 is in the press position, the direction from the fixed end to the free end of the second link 92 is closer to the vertical than when the upper transport roller 12 is in the standby position. The direction in which each of the third links 125 extends from the lower end portion 125A to the upper end portion 125B need not necessarily strictly be the up-down direction.

As shown in FIG. 10 to FIG. 12, when the bonding device 1 moves the upper transport roller 12 from the press position to the standby position, the actuator 100 moves the output shaft 103 to the rear. When the output shaft 103 moves to the rear, the coupling shaft 127 of the coupling link mechanism 120 that is coupled to the output shaft 103 via the coupling portion 129 rotates in the clockwise direction in a left side view, and the coupling shafts 123, 124 and 128 respectively move rearward, upward, and rearward and upward. When the coupling shaft 128 moves rearward and upward, the coupling shafts 95 and 87, which are the free ends of the link mechanism 90, respectively move rearward and downward, and rearward and upward, and the front end portion 16A of the support arm portion 16 moves upward. At this time, since the coupling shafts 95 and 87, which are the free ends of the link mechanism 90, move rearward, the front end portion 16A of the support arm portion 16 is unlikely to move forward. As shown by an upper section of FIG. 11 and an upper section of FIG. 12, when the upper transport roller 12 is in the standby position, the output shaft 103 of the actuator 100 is positioned at the rear end of a movable range. Each of the third links 125 extends rearward and downward from the coupling shaft 124. When the upper transport roller 12 is in the standby position, the second link 92 extends toward the downstream side in the transport direction and downward, from the coupling shaft 926 to the coupling shaft 87. The operation when the bonding device 1 moves the upper transport roller 12 from the standby position to the press position is a reversal of the operation when the bonding device 1 moves the upper transport roller 12 from the press position to the standby position, and thus an explanation thereof will be omitted here.

A bonding operation of the bonding device 1 will be explained. When a bonding preparation is completed, the upper transport roller 12 is in the press position, and the right end portion of the lower sheet 8 and the left end portion of the upper sheet 6 are overlapped with each other at a pressure bonding point of the upper transport roller 12 and the lower transport roller 270. The bonding device 1 drives the upper transport motor 71 and the lower transport motor 262 in synchronization with each other. The upper transport roller 12 rotates in the clockwise direction in a left side view. The lower transport roller 270 rotates in the counterclockwise direction in a left side view. The lower sheet 8 and the upper sheet 6 move from the upstream side to the downstream side in the transport direction. In accordance with a detection result by the upper detection portion 140, the bonding device 1 drives the upper clamp mechanism 130 and adjusts the position of the left end portion of the upper sheet 6 in the left-right direction. In accordance with a detection result by the lower detection portion 532, the bonding device 1 drives the lower clamp mechanism 500 and adjusts the position of the right end portion of the lower sheet 8 in the left-right direction. At the same time as driving the upper transport motor 71 and the lower transport motor 262, the bonding device 1 drives the pump motor 114 of the supply mechanism 45. When the pump motor 114 is driven, the gear pump 46 of the supply mechanism 45 is driven, sucks up an appropriate amount of adhesive from the cartridge mounted in the mounting portion 41, and supplies the adhesive to the flow path 37 inside the lever 9. The adhesive flows from the flow path 37 to the flow path 113 inside the nozzle 11. The adhesive is discharged from the discharge port 112 of the nozzle 11. The bonding device 1 clamps a bonding section of the lower sheet 8 and the upper sheet 6 between the upper transport roller 12 and the lower transport roller 270, and transports the lower sheet 8 and the upper sheet 6 from the front to the rear while bonding them together by pressing a bonding surface to which the adhesive has been applied.

In the above-described embodiment, the bonding device 1, the discharge port 112, the nozzle 11, the supply mechanism 45 and the transport mechanism 43 are respectively examples of a bonding device, a discharge port, a nozzle, a supply mechanism and a transport mechanism of the present invention. The transport shaft 268, the lower transport roller 270, the upper roller shaft 84, the upper transport roller 12, the lower transport motor 262, the support arm portion 16, the upper transport motor 71 and the actuator 100 are respectively examples of a lower roller shaft, a lower transport roller, an upper roller shaft, an upper transport roller, a lower transport motor, a support arm portion, an upper transport motor and an actuator of the present invention. The first link 91, the second link 92, the link mechanism 90, the coupling shaft 87, the third links 125 and the coupling link mechanism 120 are respectively examples of a first link, a second link, a link mechanism, a coupling shaft, a third link and a coupling link mechanism of the present invention. The upper transport unit 30, the main body portion 33 of the bonding device 1, the attachment portion 62, the unit position adjustment portion 65, the upper detection portion 140 and the detection portion position adjustment portion 142 are respectively examples of an upper transport unit, a main body portion of the bonding device, an attachment portion, a unit position adjustment portion, a detection portion and a detection portion position adjustment portion of the present invention.

A known bonding device swings a support arm portion around a shaft that is provided in the support arm portion, and thus causes an upper transport roller provided on one end of the support arm portion to move upward. In the known bonding device, when the upper transport roller moves upward, the upper transport roller moves in an arc shape around the shaft provided in the support arm portion, and therefore, also moves in the forward direction. In the bonding device 1 of the above-described embodiment, when the upper transport roller 12 moves upward, the coupling shaft 87 that supports the lower end portion 92A of the second link 92 is moved rearward by the link mechanism 90, and therefore, the front end portion 16A of the support arm portion 16 is unlikely to move forward. Thus, the bonding device 1 can reduce the amount of movement of the upper transport roller 12 toward the upstream side in the transport direction when the upper transport roller 12 moves upward, in comparison to the related art. Thus, in comparison to the related art, when the upper transport roller 12 moves upward, the upper transport roller 12 is less likely to interfere with another member (the nozzle 11, for example) disposed on the upstream side in the transport direction, and the bonding device 1 can increase the amount of upward movement of the upper transport roller 12 in comparison to the related art. Therefore, the bonding device 1 can enlarge a working space below the support arm portion 16 in comparison to the related art, and can improve workability when arranging the upper sheet 6 and the lower sheet 8 on the bonding device 1.

The output shaft 711 of the upper transport motor 71 of the bonding device 1 is coaxial with the coupling shaft 87 of the second link 92 and the support arm portion 16. In comparison to a device in which the output shaft 711 of the upper transport motor 71 is not coaxial with the coupling shaft 87 of the second link 92 and the support arm portion 16, the bonding device 1 can reduce an influence of a weight of the upper transport motor 71 when the upper transport roller 12 moves upward or downward. In the bonding device 1, when the power is not transmitted from the actuator 100 to the support arm portion 16 in a state in which the upper transport roller 12 is in the standby position, the front end portion 16A of the support arm portion 16 does not rapidly move downward due to the weight of the upper transport motor 71. Thus, the safety of the bonding device 1 is higher than that of a device in which the support arm portion 16 supports the upper transport motor 71 and the output shaft 711 of the upper transport motor 71 is not coaxial with the coupling shaft 87 of the second link 92 and the support arm portion 16.

The upper transport motor 71 of the bonding device 1 is supported by the support arm portion 16. In comparison to a device in which the upper transport motor 71 is supported by a portion other than the support arm portion 16, the bonding device 1 can simplify the structure that transmits the power of the upper transport motor 71 to the upper transport roller 12. In the bonding device 1, when the upper transport roller 12 moves upward or downward, a positional relationship between a rotation position of the output shaft 711 of the upper transport motor 71 and a rotation position of the upper transport roller 12 is unlikely to change. Therefore, when the upper transport roller 12 moves upward or downward, the bonding device 1 can inhibit the upper transport roller 12 from rotating due to a change in the aforementioned positional relationship. In the bonding device 1, the support arm portion 16 supports the coupling shaft 87 via the bearings 89 and 94. The bonding device 1 couples the support seat 85 and the second link 92 via the bearing 93. In the bonding device 1, the second link 92 supports the right end of the coupling shaft 87 via the bearing 96. Therefore, with a relatively simple structure, the bonding device 1 can downsize the structure in which the support arm portion 16 supports the upper transport motor 71 and the structure in which the output shaft 711 of the upper transport motor 71 is coaxial with the coupling shaft 87 of the second link 92 and the support arm portion 16.

The actuator 100 of the bonding device 1 is the air cylinder that extends in parallel to the transport direction of the upper sheet 6. The bonding device 1 has a smaller structure in the up-down direction, in comparison to when an actuator extending in the up-down direction is provided. The bonding device 1 can expand the working space below the support arm portion 16 in comparison to the related art, and can improve the workability when arranging the upper sheet 6 and the lower sheet 8 on the bonding device 1.

The bonding device 1 includes the third links 125 that are rotatably supported by the support arm portion 16, and further includes the coupling link mechanism 120 that is coupled to the output shaft 103 of the actuator 100 and to the support arm portion 16. In the bonding device 1, when the upper transport roller 12 is in the press position, each of the third links 125 extends upward from the lower end portion 125A to the upper end portion 125B. In other words, each of the third links 125 extends in the up-down direction. When the upper transport roller 12 is in the press position, the bonding device 1 can more efficiently transmit the power of the actuator 100 in the downward direction, in comparison to when each of the third links 125 does not extend in the up-down direction.

The bonding device 1 is provided with the attachment portion 62 that is used to detachably attach the upper transport unit 30 including the upper transport motor 71 and the support arm portion 16 to the main body portion 33 of the bonding device 1. In the bonding device 1, the upper transport unit 30 can be attached to and detached from the main body portion 33 of the bonding device 1. Therefore, in the bonding device 1, a maintenance operation can be performed by detaching the upper transport unit 30, and the maintenance operation of the upper transport unit 30 can be easily performed.

The attachment portion 62 of the bonding device 1 has the unit position adjustment portion 65 that can adjust the position of the upper transport unit 30 in the left-right direction with respect to the bonding device 1. The bonding device 1 can adjust the position of the upper transport roller 12 in the left-right direction with respect to the nozzle 11. The plurality of types of nozzles 11 can be selectively mounted on the bonding device 1. The bonding device 1 can adjust the position of the upper transport roller 12 in the left-right direction, in accordance with the size and shape of the nozzle 11 mounted on the mounting portion 10 or an application position of the adhesive onto the lower sheet 8.

In the bonding device 1, the upper detection portion 140 and the detection portion position adjustment portion 142 are provided in the upper transport unit 30. When the upper transport unit 30 is mounted on the main body portion 33 of the bonding device 1, the upper detection portion 140 is positioned to the front of the nozzle 11 and can detect the position of the upper sheet 6. The detection portion position adjustment portion 142 can adjust the position of the upper detection portion 140 in the left-right direction with respect to the attachment portion 62. In other words, the bonding device 1 can adjust the position of the upper detection portion 140 in the left-right direction with respect to the nozzle 11. The bonding device 1 can adjust the position of the upper sheet 6 in the left-right direction in accordance with the size and shape of the nozzle 11 mounted on the mounting portion 10.

With respect to the present invention, in addition to the above-described embodiment, the following various modifications are possible, for example. The axial direction of the upper transport roller of the bonding device, and the transport direction of the lower sheet 8 and the upper sheet 6 may be changed as appropriate. In the bonding device, the upper transport unit need not necessarily be detachable with respect to the main body portion of the bonding device. The upper transport unit need not necessarily be provided with the unit position adjustment portion and need not necessarily be movable in the axial direction of the upper transport roller with respect to the main body portion of the bonding device. The upper clamp mechanism, the upper detection portion and the detection portion position adjustment portion may be omitted from the upper transport unit, as appropriate. The nozzle 11 need not necessarily be detachable with respect to the mounting portion 10, and the size, the shape and the like of the nozzle 11 may be changed as appropriate. The structure of each of the unit position adjustment portion 65 and the detection portion position adjustment portion 142 may be changed as appropriate. The attachment portion 62 need not necessarily include the unit position adjustment portion 65. The guide portion 70 may be omitted from the unit position adjustment portion 65. The number, the shape and the arrangement of the long holes 67 to 69 of the unit position adjustment portion 65 may be changed as appropriate. The upper detection portion 140 may be a well-known sensor, such as an image sensor or the like, other than the optical sensor.

The structural members of the lower transport mechanism, other than the lower transport roller and the lower transport motor, may be changed as appropriate. As long as the upper transport mechanism is provided with the upper transport motor, the upper transport roller, the link mechanism and the actuator, the other structural members of the upper transport mechanism may be changed as appropriate. For example, the output shaft of the upper transport motor need not necessarily be coaxial with the coupling shaft of the second link and the support arm portion. The upper transport motor need not necessarily be supported by the support arm portion. The upper transport motor may be provided in the main body portion of the bonding device, a pulley may be provided on the output shaft of the upper transport motor, and a timing belt may be stretched between the pulley and the first pulley 81. The upper transport motor may be supported by the second link. The actuator may be a solenoid, or may be an air cylinder or a solenoid that extends in a direction orthogonal to the transport direction of the upper sheet. The first link and the second link may be coupled to only one end side of the support arm portion in the left-right direction. The output shaft of the actuator may be directly coupled to the support arm portion.

The mechanism that transmits the power of the actuator to the support arm portion may be changed as appropriate. The bonding device need not necessarily be provided with the coupling link mechanism. When the upper transport roller is in the press position, the third links of the coupling link mechanism may extend in a direction that intersects with the up-down direction.

## Claims

1. A bonding device (1) including:
a nozzle (11) provided between a lower sheet (8) and an upper sheet (6) overlapped on the lower sheet from above, the nozzle having a discharge port (112) configured to discharge an adhesive toward the lower sheet;
a supply mechanism (45) configured to supply the adhesive to the nozzle; and
a transport mechanism (43) configured to transport the lower sheet to which the adhesive has been applied and the upper sheet,
the transport mechanism including
a lower transport roller (270) configured to rotate around a lower roller shaft (268) on a downstream side in a transport direction of the lower sheet and the upper sheet with respect to the nozzle, the lower transport roller being configured to come into contact with the lower sheet from below, the lower roller shaft extending in an axial direction orthogonal to the transport direction and an up-down direction,
an upper transport roller (12) configured to rotate around an upper roller shaft (84) extending in the axial direction, the upper transport roller being configured to clamp, from above, the lower sheet and the upper sheet between the upper transport roller and the lower transport roller,
a lower transport motor (262) configured to drive the lower transport roller,
a support arm portion (16) configured to rotatably support the upper transport roller at one end portion (16A) of the support arm portion, the support arm portion being configured to swing around another end portion (16B) side of the support arm portion, and
an upper transport motor (71) configured to drive the upper transport roller,
the upper transport roller being moved by an actuator (100) to a press position, at which the upper transport roller presses the upper sheet and the lower sheet between the upper transport roller and the lower transport roller, and to a standby position, at which the upper transport roller is positioned above the press position,
the bonding device comprising:
a link mechanism (90) having a first link (91) and a second link (92) provided on an upstream side of the first link in the transport direction; and
a seat portion (61) supporting the link mechanism,
wherein
one end portion (91A) of the first link is rotatably supported by the other end portion of the support arm portion,
another end portion (91B) of the first link is rotatably supported by the seat portion,
the first link is configured to rotate around the other end portion of the first link,
one end portion (92A) of the second link is rotatably supported by a section of the support arm portion between the one end portion of the support arm portion and the other end portion of the support arm portion,
another end portion (92B) of the second link is rotatably supported by the seat portion,
the second link is configured to rotate around the other end portion of the second link,
when the upper transport roller is in the press position, the second link extends downward from the other end portion of the second link to the one end portion of the second link, and the first link extends toward the upstream side in the transport direction and downward from the other end portion of the first link to the one end portion of the first link, and
when the upper transport roller is in the standby position, the second link extends toward the downstream side in the transport direction and downward from the other end portion of the second link to the one end portion of the second link.

2. The bonding device according to claim 1, wherein
an output shaft (711) of the upper transport motor is coaxial with a coupling shaft (87) of the second link and the support arm portion.

3. The bonding device according to either one of claims 1 or 2, wherein
the upper transport motor is supported by the support arm portion.

4. The bonding device according to any one of claims 1 to 3, wherein
the actuator is an air cylinder extending in parallel to the transport direction.

5. The bonding device according to any one of claims 1 to 4, further comprising:
a coupling link mechanism (120) coupled to an output shaft (103) of the air cylinder and to the support arm portion, the coupling link mechanism having a third link (125), one end portion of the third link being rotatably supported by the support arm portion,
wherein
when the upper transport roller is in the press position, the third link extends upward from one end portion (125A) of the third link to another end portion (125B) of the third link.

6. The bonding device according to any one of claims 1 to 5, further comprising:
an attachment portion (62) configured to detachably attach an upper transport unit (30) including the upper transport motor and the support arm portion to a main body portion (33) of the bonding device, the attachment portion being connected to the seat portion.

7. The bonding device according to claim 6, wherein
the attachment portion has a unit position adjustment portion (65) configured to adjust a position of the upper transport unit in the axial direction with respect to the bonding device.

8. The bonding device according to claim 6, further comprising:
a detection portion (140) configured to detect a position of the upper sheet in the axial direction, the detection portion being fixed to the seat portion, the detection portion being positioned on the upstream side of the nozzle in the transport direction when the upper transport unit is mounted on the main body portion of the bonding device; and
a detection portion position adjustment portion (142) configured to adjust a position of the detection portion in the axial direction with respect to the attachment portion.

9. An upper transport unit (30) of a bonding device (1) including:
an upper transport roller (12) configured to rotate around an upper roller shaft (84) extending in an axial direction;
an upper transport motor (71) configured to drive the upper transport roller; and
a support arm portion (16) configured to rotatably support the upper transport roller at one end portion (16A) of the support arm portion, the upper transport motor upper transport motor swing around another end portion (16B) side of the support arm portion,
the upper transport roller being movable by an actuator (100) between a lower position and an upper position that is above the lower position, the bonding device configured to bond a lower sheet (8) and an upper sheet (6) using an adhesive, the bonding device configured to transport the lower sheet and the upper sheet in a transport direction when the upper transport roller is in the lower position,
the upper transport unit comprising:
a link mechanism (90) having a first link (91) and a second link (92) provided on an upstream side of the first link in the transport direction, the link mechanism being supported by a seat portion,
wherein
one end portion (91A) of the first link is rotatably supported by the other end portion of the support arm portion,
another end portion (91B) of the first link is rotatably supported by the seat portion,
the first link is configured to rotate around the other end portion of the first link,
one end portion (92A) of the second link is rotatably supported by a section of the support arm portion between the one end portion of the support arm portion and the other end portion of the support arm portion,
another end portion (92B) of the second link is rotatably supported by the seat portion,
the second link is configured to rotate around the other end portion of the second link,
when the upper transport roller is in the lower position, the second link extends downward from the other end portion of the second link to the one end portion of the second link, and the first link extends toward the upstream side in the transport direction and downward from the other end portion of the first link to the one end portion of the first link, and
when the upper transport roller is in the upper position, the second link extends toward the downstream side in the transport direction and downward from the other end portion of the second link to the one end portion of the second link.
